# EUROPÄISCHE PATENTSCHRIFT

(11) **EP 0 401 633 B1**
(45) Veröffentlichungstag und Bekanntmachung des Hinweises auf die Patenterteilung: **11.01.1995**
(21) Anmeldenummer: 90110042.0
(22) Anmeldetag: 28.05.1990
(51) Int. Cl.: B01D 29/11, B01D 29/66, B01D 35/04

(54) **Rückspülbare Filterarmatur**
Backwashable filter mounting
Armature de filtre lavable à contre-courant

(30) Priorität: 08.06.1989 DE 3918667
(43) Veröffentlichungstag der Anmeldung: 12.12.1990
(73) Patentinhaber: HANS SASSERATH & CO KG, D-41352 Korschenbroich (DE)
(72) Erfinder: Hecking, Willi, D-4050 Mönchengladbach 2 (DE)
(74) Vertreter: Weisse, Jürgen, Dipl.-Phys. Patentanwalt

(56) Entgegenhaltungen:
- DE-A- 3 435 128
- DE-A- 3 714 660
- GB-A- 2 154 892

## Beschreibung

### Technisches Gebiet

Die Erfindung betrifft eine rückspülbare Filterarmatur zum Einbau in eine Durchflußleitung, enthaltend:
(a) ein Filtergehäuse mit einer Gehäuseinnenwand und einem gleichachsig dazu zentral in das Innere des Filtergehäuses ragenden Auslaßstutzen, der mit einem Auslaß der Filterarmatur in Verbindung steht, und einem gleichachsig zu dem Auslaßstutzen aber im Abstand von diesem in dem Filtergehäuse angeordneten Führungsglied,
(b) einen Filter, welcher einerseits abdichtend auf dem Auslaßstutzen und andererseits auf dem Führungsglied sitzt und den Abstand zwischen Auslaßstutzen und Führungsglied überbrückt, so daß zwischen der Gehäuseinnenwand einerseits und dem Auslaßstutzen, dem Filter und dem Führungsglied andererseits ein Ringraum gebildet ist,
(c) einen Einlaß, der mit dem Ringraum in Verbindung steht,
(d) eine Saugeinrichtung, die mit einer begrenzten Saugöffnung an der Außenseite des Filters anliegt, und
(e) ein Auslaßventil, über welches die Saugeinrichtung mit einem Abfluß verbindbar ist.

### Zugrundeliegender Stand der Technik

Durch die DE-A-34 35 128 ist eine Filterarmatur zum Einbau in eine Durchflußleitung bekannt, die ein Anschlußteil mit zwei fluchtenden Anschlußstutzen zum Einbau in eine Durchflußleitung aufweist. Diese beiden Anschlußstutzen bilden den Einlaß und den Auslaß der Filterarmatur. Der Anschlußteil enthält einen seitlichen, rohrförmigen äußeren Ansatz. Koaxial in dem äußeren Ansatz ist ein innerer Ansatz vorgesehen. Der äußere Ansatz bildet einen Ringraum um den inneren Ansatz herum. Dieser Ringraum ist mit dem Einlaß verbunden. Der Ringraum ist von dem Auslaß durch eine Zwischenwand getrennt. Der Auslaß steht mit dem Inneren des inneren Ansatzes in Verbindung. Eine Filtertasse ist mit ihrem Rand an dem äußeren Ansatz befestigt. Auf dem inneren Ansatz sitzt ein zylindrischer Filter, eine "Filterkerze". An seinem dem Anschlußteil abgewandten Ende ist der Filter auf einer Führung gehalten, die an dem Boden der Filtertasse vorgesehen ist. Die Filtertasse weist auf ihrem Boden einen Durchbruch auf, durch welchen ein Druckminderer koaxial zu dem Filter in die Filterarmatur einsetzbar ist. Der innere Ansatz hat einen zentralen Durchbruch, in welchen ein Ventilsitz des Druckminderers abdichtend einsetzbar ist.

Bei dieser bekannten Filterarmatur strömt das Wasser vom Einlaß durch den Ringraum des Anschlußteils in den Raum zwischen Filtertasse und Filter. Es strömt dann durch das Filter hindurch um das Gehäuse des Druckminderers herum und über das Ventil des Druckminderers in den inneren Ansatz und zum Auslaß. Durch den Druckminderer wird der Auslaßdruck geregelt.

Diese bekannte Filterarmatur gestattet keine Rückspülung des Filters. Es ist daher erforderlich, den Filter in bestimmten Abständen auszutauschen oder zu reinigen. Dazu muß die Filterarmatur demontiert werden. Dazu muß die Wasserzufuhr abgesperrt werden, so daß die Versorgung vorübergehend unterbrochen wird.

Es sind Filterarmaturen bekannt, die eine Rückspülung gestatten. Es kann dann der Filter gereinigt werden, ohne daß eine Demontage der Filterarmatur oder eine Unterbrechung der Versorgung erforderlich ist.

Bei einer bekannten Filterarmatur dieser Art wird das Wasser vom Ein laß in das Innere eines zylindrischen Filters geleitet. Es fließt dann von innen nach außen durch den Filter und strömt dann auf der Außenseite des Filters durch den Ringraum zwischen Filter und Gehäuse zum Auslaß. Im Inneren des Filters ist eine Rückspüleinrichtung axialbeweglich geführt. Diese Rückspüleinrichtung weist begrenzte Saugöffnungen auf, die auf zwei in axialem Abstand voneinander angeordneten Ringflächen an der Innenfläche des Filters anliegen. Diese Saugöffnungen sind über Leitungen mit einem Auslaßventil verbunden. Um eine Reinigung des Filters durch Rückspülung zu erreichen, wird das Auslaßventil von Hand geöffnet. Dann wird die Rückspüleinrichtung ebenfalls von Hand axial verschoben, so daß sich die Saugöffnungen über die gesamte Innenfläche des Filters bewegen. Die Verwendung begrenzter schmaler Saugöffnungen hat den Vorteil, daß sich eine hohe Strömungsgeschwindigkeit in Rückspülrichtung durch den Filter ergibt, ohne daß die Gesamtmenge der über das Auslaßventil zu einem Abschluß strömenden Wassermenge unzulässig groß wird. Die Druckdifferenz zwischen Wasserleitungsdruck und Atmosphärendruck im Abfluß bleibt an den Saugöffnungen im wesentlichen erhalten. Die hohe Strömungsgeschwindigkeit gewährleistet, daß die von dem Filter festgehaltenen Verunreinigungen beim Rückspülvorgang mit gutem Wirkungsgrad herausgespült werden.

Die bekannte Filterarmatur erfordert eine manuelle Betätigung sowohl des Auslaßventils als auch der Mittel zu axialen Verschiebung der Saugeinrichtung. Da die Saugeinrichtung sich im Inneren des Filters befindet, ist es dort nicht möglich, im Inneren des Filters in raumsparender Weise einen Druckminderer unterzubringen, wie dies bei der zuerst erwähnten Filterarmatur nach der DE-A-34 35 128 geschieht.

Es ist weiterhin eine Filterarmatur mit Rückspülmöglichkeit bekannt (Firmendruckschrift "Rückspülbare Hauswasser-Station HS 10" der Firma Honeywell Braukmann), bei welcher in einer Filtertasse, die an einem Anschlußstück angebracht ist, zwei zylindrische Filter angeordnet sind. Das Anschlußstück ist ähnlich aufgebaut wie bei der zuerst erwähnten bekannten Filterarmatur. Es weist fluchtende Anschlußstutzen als Einlaß und Auslaß sowie einen äußeren und einen inneren, rohrförmigen, seitlichen Ansatz auf. Die Filtertasse ist mit dem äußeren Ansatz verbunden, der mit dem Einlaß in Verbindung steht. Der erste zylindrische Filter ist fest mit dem inneren Ansatz verbunden. Der zweite zylindrische Filter ist gleichachsig zu dem ersten Filter angeordnet und axial beweglich. Der zweite zylindrische Filter ist an seiner dem ersten Filter abgewandten Stirnseite durch eine Platte abgeschlossen. Eine Feder sucht den zweiten Filter in Richtung auf das Anschlußstück zu drücken. Der Hub des Filters entgegen der Wirkung der Feder ist durch einen Anschlag begrenzt. Am Boden der Filtertasse ist ein Auslaßventil vorgesehen.

Im Normalbetrieb fließt das Wasser wie bei der eingangs schon geschilderten Filterarmatur aus dem Einlaß durch den Mantelraum zwischen Filtertasse und Filtern, von außen nach innen durch die beiden Filter und dann im Inneren der Filter zu dem inneren Ansatz und dem Auslaß. Zum Rückspülen wird das Auslaßventil geöffnet. Dadurch wird der zweite zylindrische Filter infolge des auf die Platte wirkenden Wasserdrucks etwas zum Boden der Filtertasse hin verschoben. Infolge eines nach innen vorstehenden Randes der Filtertasse und eines nach außen vorstehenden Randes an dem oberen Ende des zweiten Filters wird dabei der um das zweite Filter herum gebildete Mantelraum von dem mit dem Einlaß verbundenen Mantelraum um das erste Filter herum abgetrennt. Das Wasser fließt jetzt vom Einlaß nur durch das erste Filter. Das zweite Filter wird dagegen in umgekehrter Richtung von innen nach außen von gefiltertem Wasser durchströmt, das dann zum Auslaßventil und zu einem Ablauf strömt.

Bei dieser bekannten Anordnung wird nur ein Teil der gesamten Filterfläche, nämlich der zweite Filter durch Rückspülung gereinigt. Dabei strömt Wasser gleichzeitig durch die gesamte Fläche des zweiten Filters. Wenn dabei die Gesamtwassermenge begrenzt werden soll, wird dabei die Strömungsgeschwindigkeit des Wassers bei der Rückspülung relativ gering. Die Reinigungswirkung der Rückspülung ist daher begrenzt.

Die DE-A-37 14 660 zeigt eine Filterarmatur zum Einbau in eine Durchflußleitung. Die Filterarmatur enthält einen zylindrischen Filter und eine Saugeinrichtung, die mit begrenzten Saugöffnungen an der einlaßseitigen, äußeren Oberfläche des Filters anliegt. Die Saugeinrichtung ist über ein Auslaßventil mit einem Abfluß verbindbar. Zum Bewegen der Saugeinrichtung über die Oberfläche des Filters ist ein Hubglied vorgesehen, das auf einer Seite vom Druck des Einlasses beaufschlagt ist und auf der anderen Seite einen Raum begrenzt, der mit dem Einlaß über die als Drosselstelle wirkende Saugeinrichtung verbunden und von dem Auslaßventil abgeschlossen ist. Beim Öffnen des Auslaßventils entsteht an dem Hubglied und der Saugeinrichtung eine Druckdifferenz. Dadurch führt das Hubglied einen Hub gegenüber dem gehäusefesten Filter aus. Die Saugeinrichtung ist so an dem Hubglied angebracht, daß sie dabei über die Oberfläche des Filters bewegt wird. Die Druckdifferenz an der relativ engen Saugöffnung des Hub-gliedes bewirkt eine starke Stömung durch das Filter und in die Saugöffnung, daß das Filter im Rückstrom gereinigt wird. Zentral in dem Filter sitzt ein Druckminderer, der mit einem rohrförmigen Gehäuse in das Filtergehäuse hineinragt.

Die bekannte Konstruktion ist recht aufwendig. Das Filter ist an dem Auslaßstutzen und an dem Gehäuse des Druckminderers über Halteringe gehalten. Zusätzlich ist dann das Hubglied erforderlich, das verschiebbar geführt ist und von welchem die Saugkanäle um den Filter herum nach oben ragen und an ihrem oberen Ende die Saugöffnungen tragen. Der Hub des Hubgliedes ist begrenzt, weil das Hubglied in seiner Ruhestellung noch unterhalb des unteren Halteringes des Filters stehen muß. Deshalb sind zwei sätze von unterschiedlich langen Saugkanälen mit zugehörigen Saugöffnungen erforderlich. Die Saugkanäle sind nur einseitig an dem Hubglied gelagert und liegen mit ihrem freien Ende mit den Saugöffnungen an dem Filter an. Dadurch ist keine saubere Anlage gewährleistet.

### Offenbarung der Erfindung

Der Erfindung liegt die Aufgabe zugrunde, eine einfache und kompakte Konstruktion eier rückspülbaren Filterarmatur der eingangs definierten Art zu schaffen.

Erfindungsgemäß wird diese Aufgabe dadurch gelöst, daß
(f) die Saugeinrichtung einen gehäusefesten Ringraum bildet, welcher mit der an dem Filter anliegenden Saugöffnung verbunden und über das Auslaßventil mit dem Abfluß verbindbar ist,
(g) der Filter in einer Filterhalterung sitzt, die einerseits mit einem ersten Führungsteil auf dem Auslaßstutzen und andererseits mit einem zweiten Führungsteil auf dem Führungsglied und in der Saugeinrichtung axial verschiebbar geführt ist, wobei ein von der Gehäuseinnenwand, dem Führungsglied und dem zweiten Führungsteil begrenzter Steuerdruckraum gebildet wird,
(h) der Steuerdruckraum mit dem Ringraum der Saugeinrichtung verbunden ist und
(i) die Filterhalterung von einer Feder im Sinne einer Vergrößerung des Steuerdruckraumes belastet ist.

Nach der Erfindung ist also der Filter axial beweglich, während die Saugeinrichtung stationär im Filtergehäuse sitzt. Der Hub des Filters wird dabei durch die Druckdifferenz an dem zweiten, unteren Führungsglied der Filterhalterung hervorgerufen. Dieses zweite untere Führungsglied hat die Funktion des Halteringes bei der bekannten Filterarmatur nach der DE-A-37 14 660. Ein zusätzliches Hubglied für die Saugeinrichtung kann entfallen. Die Saugeinrichtung ist an der Gehäuseinnenwand abgestützt und liegt daher mit den Saugöffnungen stets dicht an dem Filter an. Der Filter kann einen solchen Hub ausführen, daß mit einem Hub die gesamte Oberfläche des Filters abgesaugt werden kann.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

### Kurze Beschreibung der Zeichnungen

- Fig.1: zeigt einen Längsschnitt durch eine rückspülbare Filterarmatur, wobei die Filterarmatur auf der linken Seite von Fig.1 in ihrer normalen Betriebsposition und auf der rechten Seite in der Rückspülstellung dargestellt ist.
- Fig.2: zeigt in vergrößertem Maßstab eine Einzelheit "X" von Fig.1.
- Fig.3: zeigt in vergrößertem Maßstab einen Schnitt "B" von Fig. 1.
- Fig.4: zeigt einen Schnitt "A - A" von Fig .3.

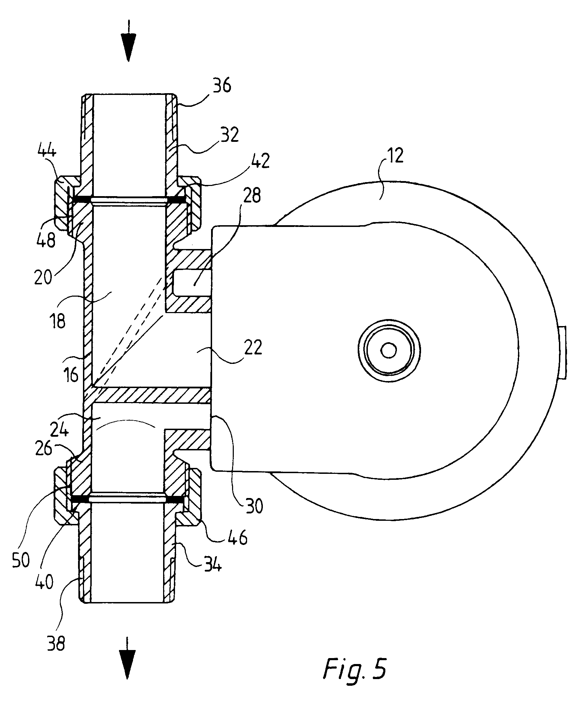

- Fig.5: zeigt eine Draufsicht auf die Filterarmatur.

### Bevorzugte Ausführung der Erfindung

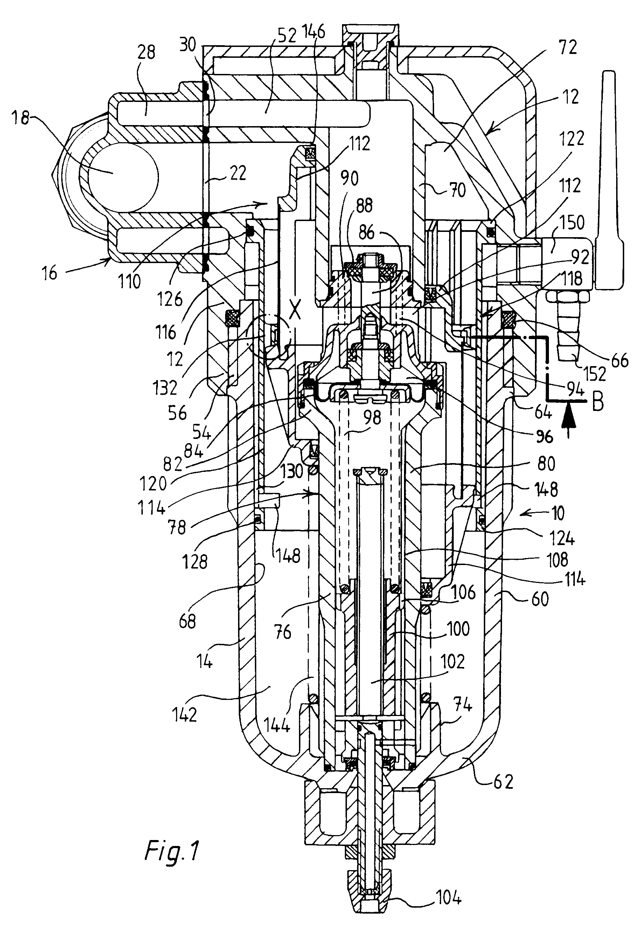

In Fig.1 besteht das Filtergehäuse 10 aus einem Gehäuseoberteil 12 und einer Filtertasse 14 Der Gehäuseoberteil ist seitlich an einem Anschlußstück 16 befestigt, das in eine Rohrleitung eingebaut ist.

Das Anschlußstück 16 weist einen Einlaßkanal 18 mit einem Einlaßstutzen 20 auf. Der Einlaßkanal 18 ist in dem Anschlußstück 16 rechtwinklig umgelenkt und endet in einer zentralen Anschlußöffnung 22 in einer Anschlußebene des Anschlußstückes 16. Das Anschlußstück 16 weist weterhin einen Auslaßkanal 24 auf. Der Auslaßkanal 24 endet in einem Auslaß-Anschlußstutzen 26. Der Auslaß-Anschlußstutzen 26 fluchtet mit dem Einlaßstutzen 20. Der Auslaßkanal 24 bildet einen Ringraum 28, welcher den abgewinkelten Teil des Einlaßkanals 18 koaxial umgibt und in einer ringförmigen Anschlußöffnung 30 in der Anschlußebene des Anschlußstücks 16 endet. Die Anschlußöffnung 30 umgibt die Anschlußöffnung 22 konzentrisch.

Zum Einbau des Anschlußstücks 16 in eine (nicht dargestellte) Rohrleitung dienen zwei Übergangsstücke 32 und 34. Die Übergangsstücke 32 und 34 sind mit Gewinden 36 bzw. 38 in die Enden der Rohrleitung eingeschraubt. Angrenzend an das Anschlußstück sind die Übergangsstücke 32 und 34 mit Flanschen 40 bzw. 42 versehen. Überwurfmuttern 44 bzw. 46 greifen über die Flansche 40 bzw. 42 und sind auf Gewinde 48 bzw. 50 der Einlaß- bzw. Auslaß-Anschlußstutzen 20 bzw. 26 aufgeschraubt. In der Anschlußebene ist die Verbindung zu dem Gehäuseoberteil 12 hergestellt. Die gemeinsame Achse von Einlaß- und Auslaß-Anschlußstutzen 20 bzw. 26 ist parallel zu der Anschlußebene. Das Anschlußstück ist aus Metall hergestellt und in der Lage, Spannungen aufzunehmen, die in der Rohrleitung auftreten können. Das Gehäuseoberteil 12 ist von diesen Spannungen entlastet und kann beispielsweise aus Kunststoff hergestellt sein.

Das Gehäuseoberteil 12 weist einen Ringraum 52 auf, der mit der Anschlußöffnung 30 fluchtet und über diese mit dem Ringraum 28 und dem Auslaßkanal 24 in Verbindung steht.

Der Gehäuseoberteil 12 weist einen mit Innengewinde 54 versehenen zylindrischen Kragen 56 auf. In diesen Kragen 56 ist die Filtertasse 14 eingeschraubt. Die Filtertasse 14 besitzt einen zylindrischen Mantel 60 und einen Boden 62. Die Filtertasse 14 weist einen Flansch 64 auf, der sich an die Stirnfläche des Kragens 56 anlegt. Ein O-Ring 66 sitzt in einer Ringnut des Kragens 56 und bewirkt eine Abdichtung zwischen der Filtertasse 14 und dem Gehäuseoberteil 12. Gehäuseoberteil 12 und Filtertasse 14 bilden eine im wesentlichen zylindrische Gehäuseinnenwand 68. Die Achse dieser Gehäuseinnenwand 68 ist senkrecht zur Achse des abgewinkelten Teils des Einlaßkanals 18 und der Ringräume 28 und 52.

In dem Gehäuseoberteil 12 sitzt koaxial zu der Gehäuseinnenwandung 68 ein Auslaßstutzen 70. Der Auslaßstutzen 70 steht mit dem Ringraum 52 in Verbindung. Um den Auslaßstutzen 70 herum ist in dem Gehäuseoberteil 12 ein Ringraum 72 gebildet. Dieser Ringraum 70 steht über die Anschlußöffnung 22 mit dem Einlaßkanal 18 in Verbindung.

Die Filtertasse 14 weist auf der Innenseite des Bodens 62 einen Kragen 74 auf. Der Kragen 74 hält das Gehäuse 76 eines Druckminderers 78. Das Gehäuse 76 ist langgestreckt und weist einen rohrförmigen Abschnitt 80 mit zylindrischer Außenfläche auf. Das Gehäuse 76 des Druckminderers 78 ist gleichachsig zu dem Auslaßstutzen 70 angeordnet. Der rohrförmige Abschnitt 80 bildet ein Führungsglied, wie noch beschrieben wird. Der Druckminderer 78 endet in einem Membrangehäuse 82, in welches eine Regelmembran 84 eingespannt ist. Die Regelmembran 84 steuert über einen Ventilstößel 86 einen Ventilteller 88. Ein ringförmiger Ventilsitzkörper 90 sitzt in dem Auslaßstutzen 70. Der Ventilsitzkörper 90 ist mit dem Membrangehäuse 82 über Rippen 92 verbunden, die zwischen sich den radialen Durchtritt der Wasserströmung gestatten. Der Ventilstößel 86 erstreckt sich durch die Öffnung des Ventilsitzkörpers 90, die an ihrem in Fig. 1 oberen Ende einen Ventilsitz bildet, welcher mit dem oberhalb des Ventilsitzkörpers 90 innerhalb des Auslaßstutzens 70 am Ende des Ventilstößels 86 sitzenden Ventilteller 88 zusammenwirkt. Kanäle 94 verlaufen durch den Ventilsitzkörper 90, Rippen 92 und das Membrangehäuse 82. Über diese Kanäle 94 wird der Ausgangsdruck, der in dem Auslaßstutzen 70 hinter dem Regelventil herrscht, auf die Membrankammer 96 übertragen, die oberhalb der Regelmembran 84 im Membrangehäuse 84 gebildet ist. Auf der anderen Seite, unten in Fig.1, ist die Regelmembran 84 von einer vorgespannten Schraubenfeder 98 belastet. Die Schraubenfeder 98 stützt sich an einem Widerlagerkörper 100 ab. Der Widerlagerkörper 100 ist auf einer Gewindespindel 102 geführt. Die Gewindespindel 102 ist mittels eines Stellknopfes 104 verdrehbar. Der Widerlagerkörper ist mit Nasen 106 in Längsnuten 108 in der Innenfläche des Gehäuses 76 unverdrehbar geführt. Bei Drehung der Gewindespindel 102 wird daher der Widerlagerkörper 100 axial verstellt. Dadurch wird die Vorspannung der Feder 98 und damit wiederum der Sollwert des Druckminderers 78 verändert.

Wasser fließt durch den Einlaßkanal 18 in den Ringraum 72, von dort um den Auslaßstutzen 70 herum zwischen den Rippen 92 hindurch durch den Zwischenraum zwischen Membrangehäuse 82 und Ventilsitzkörper 90 und durch die Öffnung des Ventilsitzkörpers 90 und den Ringspalt zwischen Ventilsitzkörper 90 und Ventilteller 88 in die Bohrung des Auslaßstutzens 70. Von dem Auslaßstutzen 70 strömt das Wasser druckgeregelt oder druckbegrenzt über Ringraum 52 und Ringraum 28 zum Auslaßkanal 24.

Die Filteranordnung enthält eine Filterhalterung, die generell mit 110 bezeichnet ist. Die Filterhalterung 110 enthält einen ersten Führungsteil 112 und einen zweiten Führungsteil 114. Der erste Führungsteil 112 ist auf dem Auslaßstutzen verschiebbar geführt. Der zweite Führungsteil 114 ist auf dem zylindrischen Abschnitt 80 des Gehäuses 76 des Druckminderers 78 geführt. Zwischen den Führungsteilen 112 und 114 erstreckt sich der zylindrische Filter 116. Die Strömung des Wassers von dem Ringraum 72 durch das Regelventil und in den Auslaßstutzen 70 muß daher stets durch das Filter 116 hindurchgehen.

Rings um den Filter 116 ist eine Saugeinrichtung angeordnet, die generell mit 118 bezeichnet ist, Die Saugeinrichtung 118 besteht aus einem zylindrischen Einsatz oder Mantel 120. Der Einsatz 120 weist längs seiner Ränder nach außen vorstehende Leisten 122 und 124 auf. Diese Leisten 122 und 124 liegen längs des gesamten Umfanges abdichtend an der Gehäuseinnenwand 68 an. Dichtringe 126 und 128 in Ringnuten dieser Leisten 122 bzw. 124 sorgen für eine Abdichtung. Zwischen dem Einsatz 120 und der Gehäuseinnenwand 68 sowie den Leisten 122 und 124 wird ein Ringraum 130 gebildet. Auf der Innenfläche des Einsatzes 120 ist eine nach innen vorspringende Leiste 132 gebildet.

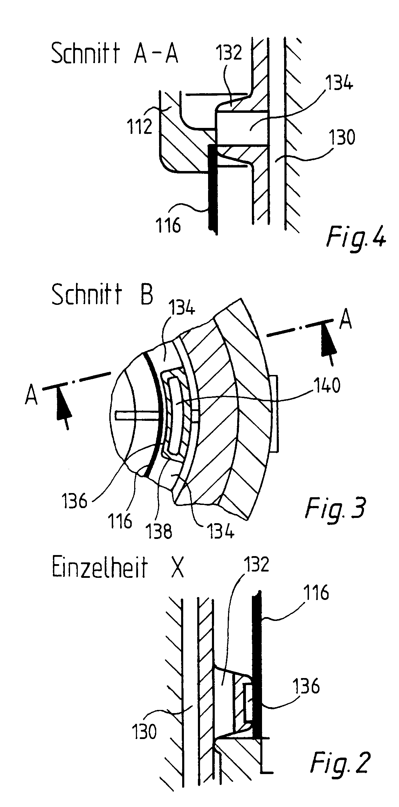

Wie aus Fig.2 und Fig.4 am besten ersichtlich ist, weist diese Leiste 132 Schlitze 134 auf, welche eine durchgehende Ringnut auf der Innenfläche der Leiste 132 mit dem Ringraum 130 verbinden. Diese Ringnut bildet die Saugöffnung 136. Zwischen den Schlitzen 134 bleiben Brückenstücke 138 zwischen der Ober- und der Unterseite der Schlitze 134 stehen. Diese Brückenstücke 138 enthalten Kanäle 140 (Fig.3) welche die Oberseite der Leiste 132 mit der Unterseite der Leiste verbinden. Die Leiste 132 liegt mit der Saugöffnung an dem Filter 116 an.

Der zweite Führungsteil 114 liegt mit seinen äußeren Rand an dem Einsatz 120 der Saugeinrichtung 118 an. Es wird auf diese Weise ein Steuerdruckraum 142 gebildet. Der Steuerdruckraum wird begrenzt von dem zweiten Führungsteil 114, dem Einsatz 120, der Filtertasse 14 und dem Gehäuse 76 des Druckminderers 78. Der zweite Führungsteil 114 steht unter dem Einfluß einer vorgespannten Schraubenfeder 144, welche den Führungsteil 114 nach oben drückt, so daß der erste Führungsteil in der Normalstellung an einem Anschlag 146 anliegt. Die Schraubenfeder ist durch das Gehäuse 76 des Druckminderers geführt.

Der Ringraum 130 steht über Durchbrüche 148 mit dem Steuerdruckraum 142 in Verbindung. Der Ringraum 130 ist über ein handbetätigtes Ventil 150 mit einem Ablauf 152 verbunden.

Die beschriebene Filterarmatur arbeitet wie folgt:
Im Normalbetrieb ist das Ventil 150 geschlossen. Über den Filter, die als Strömungsdrossel wirkende Saugöffnung 136, den Ringraum 130 und die Öffnungen 148 steht der Steuerdruckraum mit dem Eingangsdruck in Verbindung. Auf beiden Seiten sowohl des ersten Führungsteils 112 als auch des zweiten Führungsteils 114 herrscht der gleiche Druck. Die Schraubenfeder 144 drückt die Filterhalterung 110 mit dem Filter 116 in die auf der linken Seite in Fig.1 dargestellte obere Endstellung. Diese obere Endstellung ist die normale Betriebsstellung. Das Wasser fließt in der oben schon beschriebenen Weise durch den Filter 116 und das Regelventil des Druckminderers 78.

Zum Rückspülen des Filters wird das Ventil 150 geöffnet. Dadurch sinkt der Druck im Ringraum 130 praktisch auf Atmosphärendruck. Dieser Druck wird über die Öffnungen 148 auch in dem Steuerdruckraum 142 wirksam. An dem zweiten Führungsteil 114 der Filterhalterung 110 wird eine Druckdifferenz von Eingangsdruck und Atmosphärendruck wirksam. Die Filterhalterung mit dem Filter wird nach unten in Fig.1 bewegt. Die Saugeinrichtung ist dagegen gehäusefest. Der Filter 116 wird an der Saugöffnung 136 vorbeibewegt, wobei eine Strömung von innen nach außen durch die Saugöffnung 136 fließt. Feiner Schmutz wird dabei in die Saugöffnung 136 abgesaugt. Grober Schmutz wird durch die Leiste 132 von dem Filter 116 abgekratzt und sammelt sich auf der Leiste 132.

Wenn der Filter 116 seine untere Endstellung erreicht hat, die in Fig.1 auf der rechten Seite dargestellt ist, dann befindet sich die Saugöffnung 136 dicht oberhalb des Filters 116. Das ist in Fig.4 vergrößert dargestellt. Wie aus Fig.1 und 4 ersichtlich ist, ist der obere Führungsteil 112 glockenförmig. Der von der Leiste 132 hochgeschobene grobe Schmutz wird in der oberen Endstellung von dem über den oberen Führungsteil 112 fließenden Wasser in die Saugöffnung 134 gespült. Das ist derjenige Schmutz, der nicht zwischen der Innenfläche der Leiste 132 und der Außenfläche des Filters 116 hindurchgeht.

Es muß möglich sein, auch in der in Fig.1 rechts gezeigten Stellung des Filters 116 Wasser zu zapfen. Das wird ermöglicht durch die Kanäle 140 in den Brückenstücken 138. Das Wasser kann so aus dem Ringraum 72 durch die Kanäle 140 in den Raum um den nach unten verschobenen Filter 116 herum, durch den Filter 116 hindurch und wieder nach oben durch das Regelventil des Druckminderers 78 fließen.

## Patentansprüche

1. Rückspülbare Filterarmatur zum Einbau in eine Durchflußleitung, enthaltend:
(a) ein Filtergehäuse (10) mit einer Gehäuseinnenwand (68) und einem gleichachsig dazu zentral in das Innere des Filtergehäuses (10) ragenden Auslaßstutzen (70), der mit einem Auslaß der Filterarmatur in Verbindung steht, und einem gleichachsig zu dem Auslaßstutzen (70) aber im Abstand von diesem in dem Filtergehäuse (10) angeordneten Führungsglied (76),
(b) einen Filter (116), welcher abdichtend einerseits auf dem Auslaßstutzen (70) und andererseits auf dem Führungsglied (76) sitzt und den Abstand zwischen Auslaßstutzen (70) und Führungsglied (76) überbrückt) so daß zwischen der Gehäuseinnenwand (68) einerseits und dem Auslaßstutzen (70), dem Filter (116) und dem Führungsglied (76) andererseits ein Ringraum (72) gebildet ist,
(c) einen Einlaß (18), der mit dem Ringraum in Verbindung steht,
(d) eine Saugeinrichtung (118), die mit einer begrenzten Saugöffnung (136) an der Außenseite des Filters (116) anliegt, und
(e) ein Auslaßventil (150), über welches die Saugeinrichtung (118) mit einem Abfluß (152) verbindbar ist,
**dadurch gekennzeichnet, daß**
(f) die Saugeinrichtung (118) einen gehäusefesten Ringraum (130) bildet, welcher mit der an dem Filter (116) anliegenden Saugöffnung (136) verbunden und über das Auslaßventil (150) mit dem Abfluß (152) verbindbar ist,
(g) der Filter (116) in einer Filterhalterung (110) sitzt, die einerseits mit einem ersten Führungsteil (112) auf dem Auslaßstutzen (70) und andererseits mit einem zweiten Führungsteil (114) auf dem Führungsglied (76) und in der Saugeinrichtung (118) axial verschiebbar geführt ist, wobei ein von der Gehäuseinnenwand (68), dem Führungsglied (76) und dem zweiten Führungsteil (114) begrenzter Steuerdruckraum (142) gebildet wird,
(h) der Steuerdruckraum (142) mit dem Ringraum (130) der Saugeinrichtung (118) verbunden ist und
(i) die Filterhalterung (110) von einer Feder (144) im Sinne einer Vergrößerung des Steuerdruckraumes (142) belastet ist.

2. Filterarmatur nach Anspruch 1, **dadurch gekennzeichnet, daß** die Saugeinrichtung (118) von einem zylindrischen Einsatz (120) gebildet ist) der längs seiner Ränder radial nach außen vorstehende Leisten (126,128) aufweist, die an der Gehäuseinnenwand (68) anliegen, so daß der Ringraum (130) zwischen dem Einsatz (120) und der Gehäuseinnenwand (68) gebildet wird.

3. Filterarmatur nach Anspruch 2, **dadurch gekennzeichnet, daß** die Saugöffnung (136) in einer auf der Innenfläche des Einsatzes (120) gebildeten Ringleiste (132) vorgesehen ist.

4. Filterarmatur nach Anspruch 3, **dadurch gekennzeichnet, daß** der Einsatz (120) in der Nähe seines dem Steuerdruckraum (142) zugewandten Endes Durchbrüche (148) aufweist, über welche der Ringraum (130) mit dem Steuerdruckraum (142) in Verbindung steht.

5. Filterarmatur nach einem der Ansprüche 1 bis 4, **dadurch gekennzeichnet, daß**
(a) das Führungsglied ein rohrförmiges Gehäuse (76) eines Druckminderers (78) ist) das sich zentral in das Filtergehäuse (10) erstreckt und
(b) in dem Auslaßstutzen (70) ein Ventilsitzglied (90) des Druckminderers (78) sitzt, das mit einem Tellerventil (88) des Druckminderers (78) zusammenwirkt.

6. Filterarmatur nach einem der Ansprüche 1 bis 5, **dadurch gekennzeichnet, daß** der obere Führungsteil (112) der Filterhalterung (110) glockenförmig ausgebildet ist und bei Öffnen des Auslaßventils (150) in eine Endstellung gelangt) in welcher der Raum einlaßseitig von dem Führungsteil (112) im Bereich des Randes des Führungsteils (112) unmittelbar mit der Saugöffnung (136) in Verbindung steht.

7. Filterarmatur nach Anspruch 6, **dadurch gekennzeichnet, daß** die Saugöffnung (136) von Brückenstücken (138) durchsetzt ist) welche Kanäle (140) zur Verbindung des Raumes einlaßseitig von der Saugöffnung (136) mit dem Raum auslaßseitig von der Saugöffnung (136) aufweisen.

## Claims

1. Backwashable filtering fitting for installation in a throughflow conduit, containing:
(a) a filter housing (10) including a housing inner wall (68) and an outlet connector (70) which protrudes coaxially and centrally with respect to said housing inner wall into the interior of said filter housing (10) and which is in communication with an outlet of the filtering fitting, and further including a guide member (76) disposed in said filter housing (10) coaxially with said outlet connector (70) but at a spacing therefrom,
(b) a filter (116) which is sealingly seated at the outlet connector (70), on the one hand, and at the guide member (76), on the other hand, and which bridges the spacing between the outlet connector (70) and the guide member (76) such that an annulus (72) is defined between the housing inner wall (68), on the one hand, and the outlet connector (70), the filter (116) and the guide member (76), on the other hand,
(c) an inlet (18) which is in communication with the annulus,
(d) a suction device (118) which engages the outside of the filter (116) by means of a restricted suction aperture (136), and
(e) an outlet valve (150) through which the suction device (118) is connectable to a discharge (152),
**characterized in that**
(f) the suction device (118) defines an annular space (130) which is fixedly disposed in the housing, which is connected to the suction aperture (136) engaging the filter (116), and which is connectable to the discharge (152) through the outlet valve (150),
(g) the filter (116) is located in a filter mounting (110) which is axially displaceably guided by means of a first guiding member (112) at the outlet connector (70), on the one hand, and by means of a second guiding member (114) at the guide member (76) and the suction device (118), on the other hand, whereby a restricted control pressure space (142) is formed by the housing inner wall (68), the guide member (76) and the second guiding member (114),
(h) the control pressure space (142) is connected to the annular space (130) of the suction device (118), and
(i) the filter mounting (119) is loaded by a spring (144) in a direction of an increase in the control pressure space (142).

2. Filtering fitting according to claim 1, **characterized in that** the suction device (118) is formed by a cylindrical insert (120) comprising radially externally protruding ledges (126,128) which extend along its rims and engage the housing inner wall (68) such that the annular space (130) is formed between the insert (120) and the housing inner wall (68).

3. Filtering fitting according to claim 2, **characterized in that** the suction aperture (136) is provided in an annular ledge (132) which is formed at the inner face of the insert (120).

4. Filtering fitting according to claim 3, **characterized in that** the insert (120) comprises gaps (148) disposed close to its end facing the control pressure space (142), the annular space (130) being in communication with the control pressure space (142) through said gaps.

5. Filtering fitting according to any one of claims 1 to 4, **characterized in that**
(a) the guide member constitutes a tube-shaped housing (76) of a pressure reducer (78) extending centrally within the filter housing (10), and
(b) a valve seat member (90) is located in the outlet connector (70) and cooperates with a poppet valve (88) of the pressure reducer (78).

6. Filtering fitting according any one of claims 1 to 5, **characterized in that** the upper guiding member (112) of the filter mounting (110) is formed in a bell-shape and arrives, upon opening the discharge valve (150), at an end position in which the space, which is disposed on the inlet side of the guiding member (112) in the range of the rim of the guiding member (112), directly communicates with the suction aperture (136).

7. Filtering fitting according to claim 6, **characterized in that** the suction aperture (136) is traversed by bridging pieces (138) which comprises channels (140) for connecting the space on the inlet side of the suction aperture (136) with the space on the outlet side of the suction aperture (136).

## Revendications

1. Garniture de filtre avec levage à contre-courant destinée à être montée dans une conduite à écoulement libre, comprenant:
(a) un boîtier de filtre (10) muni d'une paroi intérieure de boîtier (68) et d'un talon de sortie (70) équiaxe à celui-ci, s'étendant centralement dans l'intérieur du boîtier de filtre (10), talon qui est en communication avec une sortie de la garniture de filtre, et d'un membre de guidage (76) équiaxe au talon de sortie (70) mais disposé avec un espacement dans le boîtier de filtre (10),
(b) un filtre (116) disposé d'un côté sur le talon de sortie (70) et de l'autre côté sur le membre de guidage (76) de sorte à les rendre étanches, et surmontant l'écart entre le talon de sortie (70) et le membre de guidage (76) de sorte qu'un espace annulaire (72) est formé entre la paroi intérieure de boîtier (68) d'un côté, et le talon de sortie (70), le filtre (116) et le membre de guidage (76) de l'autre côté,
(c) une entrée (18) reliée à l'espace annulaire,
(d) un dispositif d'aspiration (118) qui, avec une ouverture limitée d'aspiration (136), est en contact avec le côté extérieur du filtre (116), et
(e) une soupape de sortie (150) susceptible de relier le dispositif d'aspiration (118) à une décharge (152),
**caractérisée par le fait que**
(f) le dispositif d'aspiration (118) forme un espace annulaire (130) fixe par rapport au boîtier, espace annulaire qui est relié à l'ouverture d'aspiration (136) en contact avec le filtre, et susceptible être relié à la décharge (152) par la soupape de sortie (150),
(g) le filtre (116) est disposé dans une fixation de filtre (110) guidée, axialement mobile, de l'un côté avec un premier élément de guidage (112) sur le talon de sortie (70), et de l'autre côté avec un second élément de guidage (114) sur le membre de guidage (76) et dans le dispositif d'aspiration (118), tout en formant un espace de pression de commande limité par la paroi intérieure de boîtier (68), le membre de guidage (76) et le second élément de guidage (114),
(h) l'espace de pression de commande (142) est relié à l'espace annulaire (130) du dispositif d'aspiration (118), et
(i) la fixation de filtre (110) est chargée par un ressort (144) dans le sens d'un élargissement de l'espace de pression de commande (142).

2. Garniture de filtre selon la revendication 1, **caractérisée par le fait que** le dispositif d'aspiration (118) est formé par un insert (120) cylindrique présentant le long de ses bords, des rebords (126,128) saillant radialement vers l'extérieur et qui sont en contact avec la paroi intérieure de boîtier (68) de sorte que l'espace annulaire (130) est formé entre l'insert (120) et la paroi intérieure de boîtier (68).

3. Garniture de filtre selon la revendication 2, **caractérisée par le fait que** l'ouverture d'aspiration (136) est prévue dans un rebord annulaire (132) formé sur la surface entérieure de l'insert (120).

4. Garniture de filtre selon la revendication 2, **caractérisée par le fait que** l'insert (120) présente, près de son extrémité en face de l'espace de pression de commande (142), des percements (148) par lesquels l'espace annulaire (130) est en communication avec l'espace de pression de commande (142).

5. Garniture de filtre selon l'une des revendications 1 à 4, **caractérisée par le fait que**
(a) le membre de guidage est un boîtier tubulaire (76) d'un réducteur de pression (78) s'étendant centralement dans le boîtier de filtre (10), et
(b) un membre de siège de soupape (90) du réducteur de pression (78) est disposé dans le talon de sortie (70), membre qui coopère avec avec une soupape à disque (88) du réducteur de pression (78).

6. Garniture de filtre selon l'une des revendications 1 à 5, **caractérisée par le fait que** l'élément de guidage supérieur (112) de la fixation de filtre (110) a une forme de cloche et arrive dans une position finale lorsque la soupape de sortie (150) est ouverte, position dans laquelle l'espace sur le côté de l'entrée de l'élément de guidage (112) dans le domaine du bord de l'élément de guidage (112) est en communication directe avec l'ouverture d'aspiration (136).

7. Garniture de filtre selon la revendication 6, **caractérisée par le fait que** des éléments de pont (138) passent par l'ouverture d'aspiration (136), éléments de pont qui comprennent des canaux (149) destinés à la connexion de l'espace sur le côté de l'entrée de l'ouverture d'apiration (136), avec l'espace sur le côté de la sortie de l'ouverture d'aspiration (136).
